# FASCICULE DE BREVET EUROPEEN

(11) **EP 2 086 335 B1**
(45) Date de publication et mention de la délivrance du brevet: **15.08.2018**
(21) Numéro de dépôt: 07822013.4
(22) Date de dépôt: 30.10.2007
(51) Int. Cl.: A21D 8/06, A21B 3/18, A21B 3/13

(54) **PROCEDE DE FABRICATION DE PRODUITS DE BOULANGERIE, TELS QUE PAIN DE MIE ET PRODUITS CUITS AINSI OBTENUS**
VERFAHREN ZUR HERSTELLUNG VON BACKWAREN WIE SANDWICH-LAIBE, UND SO HERGESTELLTE BACKWAREN
METHOD OF PRODUCING BAKERY PRODUCTS, SUCH AS SANDWICH LOAVES, AND BAKED PRODUCTS THUS OBTAINED

(30) Priorité: 30.10.2006 FR 0609527
(43) Date de publication de la demande: 12.08.2009
(73) Titulaire: Jacquet Panification, 63360 Saint-Beauzire (FR)
(72) Inventeur: PIEZEL, Xavier, F-63310 Randan (FR); THIAUDIERE, Jean-Luc, F-63200 Mozac (FR)
(74) Mandataire: Cabinet Plasseraud
(86) Numéro de dépôt international: PCT/EP2007/061659
(87) Numéro de publication internationale: WO 2008/052983

(56) Documents cités:
- WO-A2-90/00001
- BE-A- 720 509
- FR-A1- 2 356 372
- FR-A1- 2 397 154
- JP-A- 2004 242 591
- US-A- 5 334 402
- US-A1- 2003 148 010

## Description

Le domaine de l'invention concerne la préparation et plus spécialement la cuisson et le démoulage de produits de boulangerie et en particulier de pains de mie, ou analogues.

Classiquement, la fabrication d'un pain comporte :
- une étape de préparation de la pâte comprenant l'opération de mélange des ingrédients traditionnels, à savoir notamment la farine, l'eau, le sucre, la levure, les matières grasses et les additifs de panification; ainsi que les opérations de pétrissage, façonnage et boulage,
- une étape de fermentation réalisée par exemple à 35°C et permettant, par exemple en 1 h 30, une augmentation du volume de la pâte selon un facteur multiplicateur e.g. de trois,
- et une étape de cuisson dans des fours traditionnels de boulangerie, éventuellement équipés de moyens de convection.

L'étape de cuisson s'opère à des températures de l'ordre de 150 à 240° C, pendant des durées d'environ 10 à 60 mn. Il est possible d'injecter de la vapeur d'eau dans le four en début de cuisson afin d'humidifier la surface du pain et de retarder ainsi la formation de la croûte. La cuisson se poursuit ensuite en atmosphère sans saturation de vapeur afin de permettre une formation satisfaisante de la croûte en surface du pain.

Il pourrait être intéressant dans certains cas de substituer la cuisson aux micro-ondes à la cuisson traditionnelle réalisée par exemple dans des fours à convection. Le brevet WO 90/00001 A2 décrit la préparation d'un pain avec les étapes suivantes: préparer une pâte, faire fermenter la pâte, disposer la pâte dans des moules, faire fermenter à nouveau, réaliser une étape de cuisson par micro-ondes, après refroidissement, le produit est coupé en tranches de 1 cm. Sur le plan industriel, la cuisson aux micro-ondes pourrait permettre éventuellement la simplification des procédés de cuisson, voire des économies, notamment en termes de consommation d'énergie. En outre, la cuisson industrielle aux micro-ondes pourrait permettre d'accéder à de nouveaux produits de boulangerie.

Cette cuisson aux micro-ondes pour les boulangeries industrielles se heurtaient jusqu'alors à une certaine incompatibilité des moules métalliques avec ce type de cuisson.

Les moules métalliques ne sont pas totalement rédhibitoires pour la cuisson aux micro-ondes. On connaît d'ailleurs des fabrications comportant des cuissons de pain aux micro-ondes dans des moules métalliques depuis environ dix ans dans le domaine de la boulangerie industrielle. Ceci étant, la perte de puissance due au moule métallique est telle que cela réduit significativement l'intérêt économique de cette cuisson aux micro-ondes.

Or, on a vu apparaître récemment sur le marché, de nouveaux polymères thermiques résistant à de hautes températures, en particulier des polyesters hautes températures tels que ceux fabriqués et commercialisés par la société DuPont sous la dénomination "THERMX® PCT POLYESTER". Il s'agit d'un polyester à base de poly(cyclohexylène-diméthylène-térephtalate). Ce genre de polymère résiste à des températures atteignant 250°C.

Des moules en PCT THERMX® ont ainsi été développés et produits par la société belge UBW. De tels moules en polymère thermique ou thermorésistants constituent un substitut avantageux aux moules métalliques, permettent des économies d'énergie grâce à une réduction des temps ou des températures de cuisson, ne corrodent pas au fil du temps, sont plus légers, donc plus faciles à manipuler et sont dotés d'une structure rigide résistant à la déformation qui peut être provoquée par l'augmentation de volume due à la fermentation. Le brevet US 2003/148010 A1 décrit un procédé pour la fermentation et la cuisson d'un produit de boulangerie consistant à disposer un pâte dans un moule réalisé à partir d'un polymère plastique thermorésistant, à faire fermenter ladite pâte et à chauffer la pâte dans le moule pour la cuire. Le moule peut comporter des perforations, la taille et le nombre des perforations dépend du type de pâte à cuire dans le moule. Pour la cuisson d'une pâte à pain, les perforations du moule représentent préférentiellement au moins 25% de la surface, plus préférentiellement au moins 50% de la surface et encore plus préférentiellement au moins 75% de la surface. Cependant, la cuisson aux micro-ondes de produits de panification n'est pas sans poser des problèmes technologiques. Il est en effet à ce jour très difficile d'obtenir par cuisson aux micro-ondes des produits de panification de qualité comparable et/ou acceptable par rapport aux produits standard.

En particulier, les caractéristiques physico-chimiques et mécaniques du pain, au sortir de la cuisson aux micro-ondes, sont telles que le pain est d'une extrême fragilité, la structure de sa mie n'étant pas figée, ce qui empêche un démoulage mécanique aisé et adapté aux impératifs industriels. De plus, le pain adhère fortement au moule, ce qui complique d'autant plus le démoulage.

Par ailleurs, il existe un besoin d'optimisation des conditions de cuisson aux micro-ondes de produits de panification, en particulier de pains de mie ou analogues, notamment dans le cas où les moules mis en oeuvre sont des moules en polymère thermorésistant.

En outre, le marché des produits de panification connaît actuellement une tendance correspondant à un intérêt de plus en plus marqué par les consommateurs pour des pains sans croûte, en particulier des pains de mie sans croûte. Ces produits de panification sans croûte sont particulièrement appréciés par les enfants.

Ces pains de mie sans croûte peuvent être obtenus à partir de pains de mie fabriqués avec une croûte, que l'on enlève ensuite, par exemple à l'aide de moyens de découpe de type trancheuse électrique à lames, écroûteuse, jet d'eau, laser ou emporte-pièce.

Une alternative est de prévoir un procédé de cuisson permettant d'éviter la formation de la croûte.

Le brevet US-B-2 087 912 décrit une méthode pour cuire un pain sans croûte dans un réceptacle fermé, ladite méthode consistant à soumettre la pâte disposée dans ce réceptacle à une chaleur pendant une période de temps suffisante pour cuire la pâte et absorber une partie des vapeurs et des gaz émis par le pain durant la cuisson.

Le brevet français FR-B-2 496 537 décrit une machine pour le découpage automatique de la croûte de tranches de produits panifiés.

Le brevet US-B-6 004 596 porte sur un sandwich composé de deux tranches de pain de mie sans croûte, scellées de façon à ce que la garniture, composée de beurre de cacahuètes et de confiture, ne fuie pas.

A ce jour, aucune des méthodes connues et utilisées ne permet de proposer des produits de panification, en particulier des pains de mie sans croûte, ou analogues, donnant satisfaction en termes de réalisation industrielle et de qualité organoleptique.

Dans ce contexte, l'un des objectifs essentiels de la présente invention est de fournir un procédé alternatif performant et efficace, de fabrication par cuisson aux micro-ondes de produits de panification, ce procédé se devant par ailleurs d'être fiable, simple et économique.

Un autre objectif essentiel de l'invention est de fournir un procédé de fabrication par cuisson micro-ondes de produits de panification, dans lequel l'étape de démoulage est aisément réalisable en particulier à l'échelle industrielle, sans porter atteinte à l'intégrité du produit de boulangerie obtenu après cuisson au moins en partie aux micro-ondes.

Un autre objectif essentiel de l'invention est de fournir un procédé de fabrication par cuisson aux micro-ondes permettant d'obtenir des produits de panification, en particulier des pains de mie sans croûte ou analogues, lesdits produits devant présenter un aspect attirant, avoir de bonnes qualités organoleptiques et être à faible coût de revient.

Ces objectifs, parmi d'autres sont atteints par la présente invention qui concerne tout d'abord un procédé de fabrication de produits de boulangerie, en particulier de pains de mie ou analogues, caractérisé en ce qu'il consiste essentiellement :
- à préparer une pâte,
- éventuellement, à faire fermenter ladite pâte,
- à disposer la pâte dans un moule
   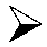 réalisé à partir d'un polymère plastique thermorésistant, de préférence un polyester haute température à base de poly(cyclohexylène-diméthylène-térephtalate) ;
   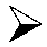 et pourvu de moyens d'évacuation de la vapeur d'eau produite pendant et après la cuisson, moyens d'évacuation comprenant des perforations réparties de manière homogène sur au moins une partie des parois du moule, de préférence sur toutes les parois,
- à réaliser au moins une étape de cuisson de la pâte contenue dans le moule au moyen de micro-ondes,
- éventuellement, à réaliser une autre étape de cuisson par d'autres moyens de cuisson, tels que des moyens traditionnels de chauffage (fours de boulangerie par exemple à convection),
- à décoller le produit cuit obtenu des parois du moule,
- éventuellement, à refroidir le produit cuit et/ou le moule,
- et à démouler le produit cuit.

De préférence, l'étape de cuisson au moyen de micro-ondes consiste essentiellement à appliquer une puissance totale de cuisson comprise entre 70 Wh/kg et 110, préférentiellement comprise entre 75 Wh/kg et 85 Wh/kg, idéalement répartie en deux phases de cuisson.

De manière plus préférée encore, l'étape de cuisson au moyen de micro-ondes consiste:
- à mettre en oeuvre une phase 1 de cuisson de la pâte contenue dans le moule au moyen de micro-ondes avec une puissance nominale P1 :
   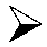 telle que la puissance d'émission Pe1 (exprimée en watts/min/gramme de pâte) soit comprise entre 10⁻³ et 10⁻¹, de préférence entre 1.10⁻² et 3. 10⁻², et plus préférentiellement encore entre 1,5.10⁻² et 5,5.10⁻²
   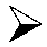 ou telle que la puissance d'émission Pe1 (exprimée en watts heure/kilogramme de pâte) soit comprise 10 Wh/kg et 40 Wh/kg, et plus préférentiellement encore entre 12 Wh/kg et 30 Wh;
- à mettre en oeuvre ensuite une phase 2 de cuisson au moyen de micro-ondes avec une puissance nominale P2 :
   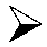 telle que la puissance d'émission Pe2 (exprimée en watts/min/gramme de pâte), soit comprise entre 10⁻³ et 10⁻¹, de préférence entre 1.10⁻² et 7. 10⁻², et plus préférentiellement encore entre 1,5.10⁻² et 8,5.10⁻²;
   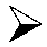 ou telle que la puissance d'émission Pe2 (exprimée en watts heure/kilogramme de pâte), soit comprise entre 30 Wh/kg et 100 Wh/kg, et plus préférentiellement encore entre 55 et 75 Wh/kg;
sachant par ailleurs que P1 ≤ P2.

Tout d'abord, il est du mérite des inventeurs d'avoir compris que les difficultés de démoulage susceptibles de survenir dans le cadre d'une cuisson de pain aux micro-ondes, sont au moins en partie liées à la production de vapeur d'eau pendant et après la cuisson, en particulier pendant la phase de ressuage. En effet, à l'inverse d'une cuisson traditionnelle, les inventeurs ont observé que l'évaporation de l'eau pendant la phase de cuisson était minime alors qu'elle était très importante pendant la phase de ressuage. Les inventeurs ont également observé que la montée en température, générée par les micro-ondes, conduit à une évaporation de l'eau contenue dans la pâte. Cette eau sous forme vapeur sature l'air froid du four à micro-ondes mais surtout l'espace très faible entre la pâte et les parois du moule, qui sont naturellement à température inférieure du fait de leur constitution en un polymère plastique thermorésistant, de préférence un polyester haute température à base de poly(cyclohexylène-diméthylène-térephtalate). Les vapeurs d'eau générées pendant et immédiatement après la cuisson condensent sur les parois du moule et forment avec l'amidon contenu dans la pâte un empois qui se comporte comme un adhésif s'opposant au démoulage.

Par ailleurs, il est avantageux d'utiliser un moule réalisé selon une structure massive (notamment non-fibreuse) en polymère plastique thermorésistant, de préférence par moulage. Il s'agit d'un matériau bloc par exemple non fibreux, qui n'est pas un tissu ni un tricot ni un non-tissé composite. Les perforations sont réalisées sur ce moule à parois pleines.
L'une des clés du procédé est d'utiliser un moule pourvu de moyens d'évacuation de la vapeur d'eau, ces moyens d'évacuation comprenant des perforations réparties de manière homogène sur au moins une partie des parois du moule, et de préférence sur toutes les parois. Plus particulièrement, les perforations des parois représentent, en % de la surface totale des parois, entre 0,1 et 10, de préférence entre 1 et 5, et plus préférentiellement encore entre 1,5 et 2. De manière avantageuse, les perforations sont ménagées sur tout ou partie des arêtes du moule, de préférence à raison d'une perforation tous les 4 cm +/- 0,5, et plus préférentiellement encore tous les 2,0 cm +/- 0,5 ou tous les 1,5 cm +/- 0,5. De même, les perforations peuvent être ménagées sur les parois du moule à raison d'une perforation tous les 2 cm +/- 0,5 dans le sens de la longueur de la paroi et tous les 1 cm +/- 0,5 dans le sens de la hauteur du moule. Les perforations peuvent de préférence avoir un diamètre compris entre 2 et 5 mm ou entre 1 et 2 mm, de préférence sensiblement égal à 3 mm ou à 2 mm. Les perforations permettent tout d'abord de favoriser l'évacuation de la vapeur d'eau pendant la cuisson.

D'une manière avantageuse, on décolle le produit cuit obtenu des parois du moule à l'aide d'un jet gazeux sous pression.
Le jet gazeux, de préférence d'air, de décollement peut être émis à une pression (en bars) supérieure ou égale à 2, de préférence, supérieure ou égale à 3, et plus préférentiellement encore, comprise entre 4 et 7.
Le jet d'air comprimé est appliqué sur toutes les faces du moule dès sa sortie du four, et du fait des perforations, ce jet d'air et/ou ce flux d'air favorise le décollement du produit cuit des parois du moule.

D'une manière remarquable, on refroidit le produit cuit et/ou le moule à l'aide d'un jet gazeux sous pression et/ou à l'aide d'un système de ventilation diffusant un flux d'air. Le jet gazeux, de préférence d'air, de refroidissement peut être émis par exemple à une pression (en bars) inférieure ou égale à 5, de préférence inférieure ou égale à 4, et, plus préférentiellement encore, comprise entre 1 et 3.
Il convient que le système de ventilation soit suffisamment puissant. Il peut être situé en regard des faces latérales et/ou la face inférieure du moule.
Le jet d'air et/ou le flux d'air de refroidissement est (sont) appliqué(s) de manière à lécher l'ensemble des faces du moule et à créer des courants d'air latéraux qui vont faciliter l'évacuation de la vapeur d'eau s'échappant des perforations prévues sur le moule, et ainsi faciliter le refroidissement du pain dans le moule. De ce fait, on évite la formation de l'empois d'amidon et on favorise le démoulage du produit. Le refroidissement accéléré du produit permet également d'accélérer sa manipulation.

Par ailleurs, les inventeurs ont également eu le mérite d'avoir élaboré un protocole comprenant une étape de cuisson optimisée permettant de produire des produits de panification cuits, en particulier des pains de mie ou analogues, dotés d'excellentes propriétés organoleptiques et présentant en particulier une texture agréable, voire même selon un mode spécifique de mise en oeuvre, une absence de croûte. Les pains obtenus montrent un volume de développement satisfaisant. Ils ont une bonne tenue et ils sont agréables à la dégustation, au toucher et à l'aspect. La texture de ces pains obtenus aux micro-ondes peut être particulière en termes de souplesse. Cela permet d'obtenir des tranches de pain susceptibles d'être enroulées sur elles-mêmes.

L'une des clés de l'optimisation de l'étape de cuisson est d'avoir proposé :
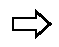 de mettre en oeuvre une puissance totale comprise entre 70 Wh/kg et 110 Wh/kg, préférentiellement comprise entre 75 et 85 Wh/kg
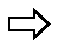 et, de préférence, d'avoir recours à une séquence de cuisson progressive avec des puissances nominales de consigne telles que P1 ≤ P2 et des puissances d'émission Pe1 et Pe2 définies comme suit:
   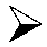 - Pe1 :
      → (exprimée en watts/min/gramme de pâte) est comprise entre 10⁻³ et 10⁻¹, de préférence entre 1.10⁻² et 3. 10⁻², et plus préférentiellement encore entre 1,5.10⁻² et 5,5.10⁻²,
      → ou (exprimée en watts heure/kilogramme de pâte) est comprise 10 Wh/kg et 40 Wh/kg, et plus préférentiellement encore entre 12 Wh/kg et 30 Wh;
   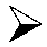 Pe2 :
      → (exprimée en watts/min/gramme de pâte), est comprise entre 10⁻³ et 10⁻¹, de préférence entre 1.10⁻² et 7. 10⁻², et plus préférentiellement encore entre 1,5.10⁻² et 8,5.10⁻²;
      → ou (exprimée en watts heure/kilogramme de pâte), est comprise entre 30 Wh/kg et 100 Wh/kg, et plus préférentiellement encore entre 55 et 75 Wh/kg.

L'étape de cuisson du procédé selon l'invention peut avantageusement être réalisée :
- soit en mode statique "batch" à l'aide d'un four à micro-ondes dans lequel les produits de boulangerie sont enfournés par lots et par séquences,
- soit en mode dynamique (continu) par exemple à l'aide d'un four micro-ondes à tunnel dans lequel les produits de boulangerie circulent à une vitesse donnée en continu grâce à des moyens de convoyage.

Dans le mode statique, la durée des phases de chauffage / cuisson est, avec la puissance émise, une variable importante.
Avantageusement en mode statique, la durée D1 de cette phase 1 de chauffage/cuisson aux micro-ondes est inférieure ou égale à la durée D2 de la phase 2 de chauffage/cuisson aux micro-ondes.
Par exemple, pour un pâton de masse comprise entre 600 et 700g, la durée D1 de cette phase 1 de chauffage aux micro-ondes (exprimée en secondes) en mode statique est comprise entre 60 et 300, de préférence entre 20 et 90, plus préférentiellement entre 25et 60, et plus préférentiellement encore entre 30 et 40, tandis que la durée D2 de cette phase de cuisson 2 exprimée en secondes étant comprise dans un ordre croissant de préférence : entre 30 et 180, entre 30 et 160, entre 30 et 150, entre 60 et 120, entre 65 et 120 et entre 60 et 90.
Dans le mode dynamique, la durée des phases de chauffage / cuisson est dépendante de la vitesse de convoyage des produits de boulangerie dans le four-tunnel.
Par ailleurs, toujours dans le mode dynamique, il est apparu préférable de jouer essentiellement sur la variable vitesse de convoyage et sur la variable puissance émise dans différentes zones successives du four-tunnel correspondant aux phases cuisson / chauffage pour contrôler le chauffage / cuisson des produits de boulangerie..
En mode dynamique, les durées de transit D1, D2 des produits de boulangerie dans les différentes zones successives du four-tunnel correspondant aux phases de cuisson / chauffage sont par exemple sensiblement du même ordre. C'est Pe qui varie dans ces zones.

Selon un mode préféré de mise en oeuvre, l'étape de cuisson comprend une autre étape complémentaire intéressante, à savoir une phase 3 de cuisson, au moyen de micro-ondes avec une puissance d'émission Pe3:
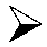 telle que la puissance d'émission Pe3 (exprimée en watts/min/gramme de pâte), comprise entre 10⁻³ et 10⁻¹, de préférence entre 1.10⁻² et 3. 10⁻², et plus préférentiellement encore entre 1,5.10⁻² et 2,5.10⁻²;
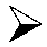 telle que la puissance d'émission Pe3 (exprimée en watts heure/kilogramme de pâte), comprise entre 15 Wh/kg et 75 Wh/kg, et préférentiellement encore entre 30 et 40 Wh/kg;
sachant par ailleurs que P1 ≤ P2 et de préférence Pe1 ≤ Pe2 ≤ Pe3.

La puissance nominale de consigne P3 peut être telle que P2 ≤ P3 ou P3 ≤ P2, de préférence P2 ≤ P3.

Dans tous les cas la somme des puissances émises par ces 3 phases de cuisson est avantageusement inférieure à la puissance totale comprise entre 70wh/Kg et 110Wh/kg préférentiellement entre 75 Wh/kg et 85 Wh/kg.

La courbe de cuisson aux micro-ondes résultant de ces trois phases à puissances d'émission croissantes Pel,Pe2,Pe3, combinée à des durées de cuisson D1, D2, D3 variables ou non pour une masse de pâton donnée, est particulièrement adaptée pour des produits de panification dans des moules en polymère thermorésistants, par exemple en poly(cyclohexylène-diméthylène-térephtalate).
Ce protocole de cuisson tient compte de la durée de la puissance et du poids de la pâte.
Le protocole de cuisson utilisé avantageusement dans l'invention profite judicieusement du moment de souplesse de la mie pour développer (augmenter le volume) le produit de panification.
Toute la difficulté est en effet d'éviter de figer la mie et d'avoir ainsi un développement satisfaisant tout en permettant de stabiliser la structure du pain une fois que le développement est parvenu à son optimum.

Avantageusement en mode statique, la durée D3 de cette phase complémentaire de chauffage/cuisson aux micro-ondes de cette phase est inférieure ou égale à la durée D1 de la phase 1. D'où il s'ensuit que l'on a de préférence D2 ≥ D1 ≥ D3.
Par exemple, pour un pâton de masse comprise entre 600 et 700g, la durée D3 de cette phase 3 de chauffage/cuisson aux micro-ondes peut être définie comme suit (D3 exprimé en secondes) : D3 compris dans l'ordre croissant de préférence : entre 30 et 180, entre 60 et 150, entre 80 et 120, entre 15 et 90, entre 30 et 90, et entre 30 et 75.

En mode dynamique, D1, D2, D3 sont e.g. sensiblement du même ordre. On joue sur Pe1, Pe2, Pe3 et sur la vitesse de convoyage.

Avantageusement, on peut mettre en oeuvre une phase Po optionnelle de chauffage par des moyens de chauffage traditionnels autres que des micro-ondes (par exemple des fours traditionnels de boulangerie à convection, des fours à sol ou des fours pâtissiers ventilés ou non) consistant à placer le moule en polymère plastique thermique contenant la pâte dans une enceinte chauffée (de préférence dans un four à convection) et de température To inférieure à la température de fusion du polymère thermique constitutif du moule et comprise entre 100 et 300°C, de préférence entre 150 et 250°C.
Cette phase optionnelle Po de chauffage traditionnel peut intervenir avant et/ou après les phases 1, 2 voire 3.

La cuisson de la pâte entraîne l'évaporation d'une partie de l'eau contenue dans la pâte, ce qui produit de l'humidité dans l'enceinte de cuisson. En pratique, plusieurs possibilités sont envisageables concernant le contrôle de cette humidité dans l'enceinte de cuisson, lors d'au moins l'une des phases de cuisson (par exemple 1 à 3 et Po). A titre d'exemples, on peut citer les possibilités -a- -b- -c- -d- ci-après.
- a- On n'intervient pas sur l'humidité de l'enceinte de cuisson, de sorte que l'enceinte de cuisson peut éventuellement parvenir à saturation en humidité.
- b- On modifie l'humidité de l'enceinte de cuisson en ajoutant de la vapeur d'eau .
- c- On modifie l'humidité de l'enceinte de cuisson en évacuant tout ou partie de la vapeur d'eau présente dans l'enceinte de cuisson, par exemple à l'aide de cheminées appelées traditionnellement en boulangerie "ouras".
- d- On modifie l'humidité de l'enceinte de cuisson en ajoutant de la vapeur d'eau et en évacuant tout ou partie de la vapeur d'eau présente dans l'enceinte de cuisson, par exemple à l'aide de cheminées appelées traditionnellement en boulangerie "ouras".

De manière encore plus préférée, les paramètres Pe1, Pe2 et Pe3 retenus pour obtenir un pain cuit sans croûte présentant toutes les caractéristiques recherchées sont par exemple les suivants:
0,02 w/min/g ou 20 Wh/kg phase 1
0,04 w/min/g ou 25 Wh/kg phase 2 (évacuation de l'humidité)
0,02 w/min/g ou 35 Wh/kg phase 3 (évacuation de l'humidité).
Ces puissances sont données pour un pain ayant par exemple une masse comprise entre 30 et 3000 g.
Dans ce mode préféré de mise en oeuvre, les puissances nominales de consigne P1, P2, P3 sont choisies pour que P1 ≤ P2 et de préférence P2 ≤ P3. Le produit de boulangerie, en particulier le pain de mie ou analogue, cuit et obtenu à l'issue du procédé, est exempt de croûte.
Au sens de l'invention, l'expression "croûte" correspond par exemple à:
une pellicule extérieure desséchée donc rigidifiée ou vitrifiée, ayant une épaisseur par exemple supérieure ou égale à 1 mm, de préférence à 0,5 mm, et éventuellement colorée par des réactions de Maillard, c'est-à-dire contenant des quantités significatives de composants caractéristiques issus de la réaction de Maillard (mélanoïdes) et/ou par caramélisation,
ou une pellicule extérieure desséchée donc rigidifiée ou vitrifiée, ayant une épaisseur par exemple inférieure ou égale à 1 mm, de préférence à 0,5 mm, et colorée par des réactions de Maillard, c'est-à-dire contenant des quantités significatives de composants caractéristiques issus de la réaction de Maillard (mélanoïdes) et/ou par caramélisation.
Le produit cuit ainsi obtenu présente une surface extérieure visuellement proche de la structure interne, à savoir de la mie. Le produit de boulangerie, en particulier le pain de mie ou analogue, cuit et obtenu à l'issue du procédé, a une texture et une souplesse telles que les tranches qui sont susceptibles d'être découpées à partir dudit produit de boulangerie, peuvent être enroulées sur elles-mêmes. Par exemple, une tranche (épaisseur e.g. 0,5 cm - 4,0 cm) de pain de mie obtenu par le procédé de l'invention, peut être enroulée sur elle-même, sans se briser ni se déchirer.

Suivant une autre particularité intéressante de l'invention, la composition de la pâte est la suivante (en parties en poids):
- farine 100
- eau 50-60
- sucre 1-15
- levure 2-5
- matières grasses 1-15
- additifs 0-5.

Enfin, dans l'éventualité où la pâte destinée à être cuite est préalablement soumise à un traitement de fermentation lui permettant de lever, ladite fermentation peut éventuellement être activée par exposition de la pâte à une source de micro-ondes, avec une puissance d'émission Pef telle que l'élévation de température induite au coeur de la pâte soit, par exemple inférieure ou égale à la température d'inactivation de la levure.
De préférence, la température induite au coeur de la pâte pour cette activation aux micro-ondes est comprise entre 30°C et 50 °C, et, plus préférentiellement encore entre 36 et 42 °C . Cette phase d'activation aux micro-ondes est avantageusement conduite simultanément à une fermentation traditionnelle dans une enceinte climatisée en température (25 à 50 °C de préférence 30° à 42°C) et en hygrométrie (60 à 99% HRE, de préférence 70 à 95 % HRE).
Avantageusement, la phase d'activation de la fermentation par exposition aux micro-ondes, peut permettre de réduire la durée de la phase de fermentation, par exemple, de 25% à 75 %
Par exemple, pour un pâton de masse comprise entre 600 et 700g, la durée Df de cette phase d'activation de la fermentation par exposition aux micro-ondes (exprimée en minutes) est comprise entre 10 et 50, de préférence entre 10 et 35, et plus préférentiellement encore entre 15 et 25.

Les exemples qui suivent permettent de mieux comprendre le rôle de l'invention et illustrent des exemples de réalisation du procédé selon l'invention.

### EXEMPLES

### EXEMPLES 1 à 7 : MODE STATIQUE

La pâte utilisée dans les exemples qui suivent, a la composition suivante :
∘ farine 100
∘ eau 56
∘ levure 3,5
∘ sucre 11
∘ sel 2
∘ matière grasse végétale 4
∘ additifs amélioration moelleux (émulsifiant, hydrocolloïdes 1
∘ Additifs technologiques (oxydant, alpha amylase , agent réducteur) 0,5
∘ Additifs de conservation microbiologique 0,5

La préparation de cette pâte comprend les étapes suivantes :
- Pétrissage en pétrin de type "spirale" 4 mn vitesse lente plus 10 mn vitesse rapide,
- Façonnage sous forme de quenelle de 30 cm de long et mise en moule.
- Fermentation dans une étuve climatisée (hygrométrie 85 % et température 35°C)

Le matériel mis en oeuvre pour la cuisson aux micro-ondes un four micro-ondes de type SAMSUNG M192 DN pour une mise en oeuvre en batch (mode statique).

Pour les étapes facultatives de cuisson par voie traditionnelle, on utilise dans les exemples qui suivent, un four à sole électrique BONGARD.

Le moule mis en oeuvre est un moule en PCT THERMX de DuPont de forme parallélépipédique et de dimensions : 300 mm de long en haut 285 mm en bas; 85 mm de hauteur, largeur 10 cm en bas et 11 cm en haut.

Selon l'invention, le moule est percé de 55 trous de 3 mm par face. Les arêtes du moule ont été également percé de perforations de 3 mm tous les 2 cm.

La quantité de pâte par moule est de 660g.

Le tableau 1 ci-dessous donne les protocoles de cuisson pour les exemples 1 à 5 et 7 et pour le contrexemple 6 ainsi que les résultats obtenus.

**TABLEAU 1**

| **Exemples** | **PROTOCOLE DE CUISSON** | **RESULTATS** |
|---|---|---|
| **1** | MO : D1 = 2' ; P = 450 soit Pe1 = 0,02 watts/min/gramme de pâte soit 20 Wh/kg de pâte | Durcissement en surface |
| | MO : D2 = 1'30 ; P = 850 soit Pe2 = 0,05 watts/min/gramme de pâte soit 50 Wh/kg de pâte | Développement moyen Zones toastées (brunissements) à l'intérieur |
| | Po : Four à sol : 3' à 220°C avec évacuation de l'humidité par ouverture du oura prévu sur le four | Aspect extérieur correct |
| **2** | MO : D1 = 2'30" ; P = 450 soit Pe1 = 0,03 watts/min/gramme de pâte soit 30 Wh/kg de pâte | Durcissement en surface |
| | MO : D2 = 1' ; P = 850 soit Pe2 = 0,02 watts/min/gramme de pâte soit 20 Wh/kg de pâte | Développement moyen |
| | Po : Four pâtissier ventilé : 5' à 180°C avec évacuation de l'humidité par ouverture du oura prévu sur le four | Pas de zones toastées (brunissements) à l'intérieur Aspect extérieur correct |
| **3** | Po : Four pâtissier ventilé : 4' à 150°C avec saturation de l'enceinte du four par l'humidité produite par la pâte | Durcissement en surface Bon développement |
| | MO : D1 = 1' 30; P = 450 soit Pe1 = 0,02 watts/min/gramme de pâte soit 20 Wh/kg de pâte | Zones toastées (brunissements) à l'intérieur |
| | MO : D2 = 2' ; P = 850 soit Pe2 = 0,04 watts/min/gramme de pâte soit 40 Wh/kg de pâte | Aspect extérieur correct |
| **4** | MO : D1 = 5'; P = 450 soit Pe1 = 0,06 watts/min/gramme de pâte soit 60 Wh/kg de pâte | Très léger durcissement en surface |
| | MO : D2 = 1'; P = 1000 soit Pe2 = 0,02 watts/min/gramme de pâte soit 20 Wh/kg de pâte | Bon développement Aspect extérieur très correct |
| **5** | MO : D1 = 2'; P = 300 soit Pe1 = 0,02 watts/min/gramme de pâte soit 20 Wh/kg de pâte | Pas de durcissement en surface |
| | MO : D2 = 2'; P = 850 soit Pe2 = 0,04 watts/min/gramme de pâte soit 40 Wh/kg de pâte | Bon développement |
| | MO : D3 = 1'30"; P = 450 soit Pe3 = 0,02 watts/min/gramme de pâte soit 20 Wh/kg de pâte | Aspect extérieur très correct |
| **Contrexemple 6** | MO : D1 = 1'30"; P = 850 soit Pe1 = 0,03 watts/min/gramme de pâte soit 30 Wh/kg de pâte | Pas de durcissement en surface Tenue correcte |
| | MO : D2 = 3'45"; P = 450 soit Pe2 = 0,04 watts/min/gramme de pâte soit 40 Wh/kg de pâte | Développement moyen Aspect extérieur moyen |
| | MO : D3 = 2'; P = 450 soit Pe3 = 0,03 watts/min/gramme de pâte soit 30 Wh/kg de pâte | Mie trop ferme. Fermeté mie : 1,77 |
| **7** | MO : D1 = 2'; P = 300 soit Pe1 = 0,02 watts/min/gramme de pâte soit 20 Wh/kg de pâte | Pas de durcissement en surface |
| | MO : D2 = 3'45"; P = 450 soit Pe2 = 0,04 watts/min/gramme de pâte soit 40 Wh/kg de pâte | Très bon développement Très bonne tenue |
| | MO : D3 = 1'30"; P = 850 soit Pe3 = 0,03 watts/min/gramme de pâte soit 30 Wh/kg de pâte | Aspect extérieur correct Résultat très correct pour la mie : moelleuse. Fermeté mie : 0,96 |

Légende : *MO signifie Micro-ondes, P (en watts) correspond à la puissance de consigne du four à MO et Po représente une phase optionnelle de cuisson au four traditionnel, qui est mise oeuvre avant ou après la cuisson aux MO dans l'exemple considéré. Les D1, D2 et D3 en minutes 'secondes*".
*Par "développement", on désigne l'augmentation de volume du pâton.*
*Par "tenue", on désigne la déformation des parois du pain de mie après cuisson.*
*Les valeurs de fermeté de la mie sont données en Newtons et sont obtenues par mesure à l'aide d'un texturomètre Llyods.*

Pendant la cuisson, la vapeur d'eau produite a pu s'échapper par les perforations prévues dans le moule et ne s'est pas accumulée dans l'espace très faible entre les parois du moule et la pâte.

Après la cuisson et dès la sortie du four, on applique sur toutes les faces des moules contenant les produits cuits obtenus un jet d'air comprimé à une pression de 4 bars, d'une durée brève de quelques secondes. L'air comprimé s'introduisant dans les perforations prévues sur le moule permet de décoller le produit cuit des parois du moule.

Ensuite, l'étape de refroidissement du pain dans le moule consiste en l'application sur l'ensemble des faces des moules d'un jet d'air à une pression de 1 bar, de manière à lécher les faces du moule pour évacuer la vapeur d'eau s'échappant des perforations. Le produit cuit est ainsi refroidi plus rapidement dans le moule et on n'observe aucune formation d'empois d'amidon entre les parois du moule et le produit cuit. Le produit cuit, présentant une température à coeur inférieure à 70°C, est alors démoulé très facilement. Comme il est déjà refroidi, il peut également être manipulé sans risque de brûlure.

A titre comparatif, les mêmes essais sont réalisés mais sans utiliser de moule perforé. Dans tous les cas, les produits cuits sont très difficiles à démouler, les produits adhérant aux parois du moule.

### EXEMPLE 8 : MODE DYNAMIQUE

La pâte utilisée dans les exemples qui suivent, a la composition suivante :
∘ farine 100
∘ eau 56
∘ levure 5
∘ sucre 11
∘ sel 2
∘ matière grasse végétale 3
∘ additifs amélioration moelleux (émulsifiant, hydrocolloïdes 1
∘ Additifs technologiques (oxydant, alpha amylase , agent réducteur) 0,5
∘ Additifs de conservation microbiologique 0,5

La préparation de cette pâte comprend les étapes suivantes :
- Pétrissage en pétrin de type "spirale" 4 mn vitesse lente plus 10 mn vitesse rapide,
- Façonnage sous forme de quenelle de 30 cm de long et mise en moule.
- Fermentation dans une étuve climatisée (hygrométrie 85 % et température 35°C)

Le matériel mis en oeuvre pour la cuisson aux micro-ondes : un tunnel équipé de 10 générateurs de micro ondes reparties en 3 zones de cuisson
Zone 1 : 2 générateurs de 0.8 Kw
Zone 2 : 2 générateurs de 0.8 Kw + 2 générateurs de 1.2Kw
Zone 3 : 4 générateurs de 1.2 Kw

Le moule mis en oeuvre est un moule en PCT THERMX de DuPont de forme parallélépipédique et de dimensions : 235 mm de long; 117 mm de hauteur, largeur 125mm.

Selon l'invention, le moule est percé de 450 trous environ de 2 mm Les arêtes du moule ont été également percé de perforations de 2 mm tous les 1.5 cm.

La quantité de pâte par moule est de 570g.
L'étape de décollement est réalisée dans un caisson en inox mis sous pression d'air comprimé
(pression 4 bars), permettant l'introduction d'air par l'ensemble des trous percés sur le moule
Le refroidissement du pain est effectué dans son moule sur un ensemble composé d'un bâti contenant un ventilateur Marque France Air 1400tr/mn puissance 1500W .permettant le refroidissement 4 pains simultanément.

Ce four est un four-tunnel fonctionnant ave chaîne à différentes zones successives correspondant à des puissances nominales P1, P2, P3 et puissance émises Pe1, Pe2, Pe3. Le tableau 2 ci-dessous donne les protocoles de cuisson ainsi que les résultats obtenus pour le présent exemple 8.

**TABLEAU 2**

| **Exemple** | **PROTOCOLE DE CUISSON** | | **RESULTATS** |
|---|---|---|---|
| **8** | Puissance totale 80 Wh / Kg | | Aspect extérieur correct, absence de croûte ,aucune zone dure. Valeur de fermeté mesuré au texturometre à J+7 :0.80 N. Produit dégusté par un jury d'expert présentant les caractéristiques d'un pain moelleux |
| | P1 : 1.6 Kw D1: 30' Pe 1: 12 Wh/Kg | | |
| | P2 : 4.2 Kw D2: 33' Pe 2: 32 Wh/Kg | | |
| | P3 : 4.8 Kw D3: 33' Pe 3: 35 Wh/Kg Décollage dans un caisson porté à 4 bars pendant environ 1 seconde Refroidissement en moule pendant 10 mn Ressuage en température ambiante pendant 120mn | | |
| | Perte en eau pendant les différentes phases du procédé | | |
| | Cuisson environ : | 2.5 % | |
| | Refroidissement en moule : | 4% | |
| | Ressuage : | 2% | |
| | Teneur en eau finale du pain | 36.5% | Identique à un pain cuit en cuisson traditionnelle |

Le procédé selon l'invention est simple et économique à mettre en oeuvre en milieu industriel et permet d'obtenir des produits de boulangerie, en particulier des pains de mie sans croûte ou analogues, cuits au moyen de micro-ondes, qui se démoulent facilement, qui présentent un aspect attirant, et qui ont des qualités organoleptiques comparables aux produits de boulangerie cuits de manière traditionnelle.

## Revendications

1. Procédé de fabrication de produits de boulangerie, en particulier de pains de mie ou analogues, **caractérisé en ce qu'**il consiste essentiellement :
• à préparer une pâte,
• éventuellement, à faire fermenter ladite pâte,
• à disposer la pâte dans un moule
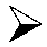 réalisé à partir d'un polymère plastique thermorésistant, de préférence un polyester haute température à base de poly(cyclohexylène-diméthylène-térephtalate) ;
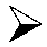 et pourvu de moyens d'évacuation de la vapeur d'eau produite pendant et après la cuisson, moyens d'évacuation comprenant des perforations réparties de manière homogène sur au moins une partie des parois du moule, de préférence sur toutes les parois,
• à réaliser au moins une étape de cuisson de la pâte contenue dans le moule au moyen de micro-ondes,
• éventuellement, à réaliser une autre étape de cuisson par d'autres moyens de cuisson,
• à décoller le produit cuit obtenu des parois du moule,
• éventuellement, à refroidir le produit cuit et/ou le moule,
• et à démouler le produit cuit.

2. Procédé selon la revendication 1, **caractérisé en ce que** l'on utilise un moule réalisé selon une structure massive en polymère plastique thermorésistant, de préférence par moulage.

3. Procédé selon la revendication 1, **caractérisé en ce que** les perforations des parois représentent (en % de la surface totale des parois) entre 0,1 et 10, de préférence entre 1 et 5, et, plus préférentiellement encore entre 1,5 et 2.

4. Procédé selon la revendication 1, **caractérisé en ce que** des perforations sont ménagées sur tout ou partie des arêtes du moule, de préférence à raison d'une perforation tous les 4 cm +/- 0,5, et plus préférentiellement encore tous les 2,0 cm +/- 0,5 ou tous les 1,5 cm +/- 0,5.

5. Procédé selon l'une quelconque des revendications précédentes, **caractérisé en ce que** l'on décolle le produit cuit obtenu des parois du moule, à l'aide d'un jet gazeux sous pression, de préférence par application d'air comprimé.

6. Procédé selon la revendication 5, **caractérisé en ce que** le jet gazeux, de préférence d'air, de décollement est émis à une pression (en bars) supérieure ou égale à 2, de préférence supérieure ou égale à 4, et, plus préférentiellement encore, comprise entre 5 et 7.

7. Procédé selon l'une quelconque des revendications précédentes, **caractérisé en ce que** l'on refroidit le produit cuit et/ou le moule, à l'aide d'un jet gazeux sous pression ou bien et/ou à l'aide d'un système de ventilation diffusant un flux d'air.

8. Procédé selon la revendication 7, **caractérisé en ce que** le jet gazeux, de préférence d'air, de refroidissement est émis à une pression (en bars) inférieure ou égale à 5, de préférence inférieure ou égale à 4, et, plus préférentiellement encore, comprise entre 1 et 3.

9. Procédé selon l'une quelconque des revendications précédentes, **caractérisé en ce que** l'étape de cuisson au moyen de micro-ondes consiste essentiellement à mettre en oeuvre une puissance totale comprise entre 70 Wh/kg et 110 Wh/kg, préférentiellement comprise entre 75 et 85 Wh/kg.

10. Procédé selon l'une quelconque des revendications précédentes, **caractérisé en ce que** l'étape de cuisson au moyen de micro-ondes consiste essentiellement:
• à mettre en oeuvre une phase 1 de cuisson de la pâte contenue dans le moule au moyen de micro-ondes avec une puissance nominale Pl :
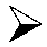 telle que la puissance d'émission Pe1 (exprimée en watts/min/gramme de pâte) soit comprise entre 10⁻³ et 10⁻¹, de préférence entre 1.10⁻² et 3. 10⁻², et plus préférentiellement encore entre 1,5.10⁻² et 5,5.10⁻²
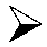 ou telle que la puissance d'émission Pe1 (exprimée en watts heure/kilogramme de pâte) soit comprise 10 Wh/kg et 40 Wh/kg, et plus préférentiellement encore entre 12 Wh/kg et 30 Wh;
• à mettre en oeuvre ensuite une phase 2 de cuisson au moyen de micro-ondes avec une puissance nominale P2 :
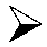 telle que la puissance d'émission Pe2 (exprimée en watts/min/gramme de pâte), soit comprise entre 10⁻³ et 10⁻¹, de préférence entre 1.10⁻² et 7. 10⁻², et plus préférentiellement encore entre 1,5.10⁻² et 8,5.10⁻² ;
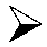 ou telle que la puissance d'émission Pe2 (exprimée en watts heure/kilogramme de pâte), soit comprise entre 30 Wh/kg et 100 Wh/kg, et plus préférentiellement encore entre 55 et 75 Wh/kg; et **en ce que** P1 ≤ P2.

11. Procédé selon la revendication 10, **caractérisé en ce que** l'étape de cuisson comprend une phase 3 de cuisson, au moyen de micro-ondes avec une puissance nominale P3 :
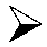 telle que la puissance d'émission Pe3 (exprimée en watts/min/gramme de pâte), comprise entre 10⁻³ et 10⁻¹, de préférence entre 1.10⁻² et 3.10⁻², et plus préférentiellement encore entre 1,5.10⁻² et 2,5.10⁻²;
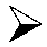 telle que la puissance d'émission Pe3 (exprimée en watts heure/kilogramme de pâte), comprise entre 15 Wh/kg et 75 Wh/kg, et préférentiellement encore entre 30 et 40 Wh/kg;
sachant par ailleurs que P1 ≤ P2 et de préférence Pe1 ≤ Pe2 ≤ Pe3.

12. Procédé selon la revendication 10 ou 11, **caractérisé en ce qu'**il comprend une phase optionnelle Po de chauffage par des moyens de chauffage traditionnels autres que des micro-ondes, consistant à placer le moule en polymère plastique thermique contenant la pâte dans une enceinte chauffée (de préférence dans un four à convection) et de température To inférieure à la température de fusion du polymère thermique constitutif du moule et comprise entre 100 et 300°C, de préférence entre 150 et 250°C.

13. Procédé selon l'une quelconque des revendications 9 à 12 **caractérisé en ce que** lors d'au moins l'une des phases de cuisson, l'humidité de l'enceinte de cuisson est modifiée en ajoutant de la vapeur et/ou en évacuant tout ou partie de la vapeur présente dans l'enceinte de cuisson, à l'aide de cheminées appelées traditionnellement en boulangerie "ouras".

14. Procédé selon l'une quelconque des revendications précédentes, **caractérisé en ce que** le produit de boulangerie, en particulier le pain de mie ou analogues, cuit et obtenu à l'issue du procédé, est exempt de croûte.

15. Procédé selon l'une quelconque des revendications précédentes, **caractérisé en ce que** la composition de la pâte est la suivante (en parties en poids):
• farine 100
• eau 50-60
• sucre 1-15
• levure 2-5
• matières grasses 1-15
• additifs 0-5.

16. Procédé selon une quelconque des revendications précédentes, **caractérisé en ce que**, lors de la fermentation éventuelle de la pâte, ladite fermentation est activée par exposition de la pâte à une source de micro-ondes, avec une puissance d'émission Pef telle que l'élévation de température induite au coeur de la pâte soit inférieure ou égale à la température d'inactivation de la levure, la température induite au coeur de la pâte pour cette activation aux micro-ondes étant de préférence, comprise entre 30°C et 50°C, et, plus préférentiellement encore entre 36 et 42°C, l'hygrométrie étant quant elle de préférence comprise entre 60 et 99% HRE, et, plus préférentiellement encore entre 70 et 95 % HRE.

## Patentansprüche

1. Verfahren zur Herstellung von Backwaren, insbesondere von Sandwich-Laiben oder ähnlichem, **dadurch gekennzeichnet, dass** es im Wesentlichen darin besteht:
• einen Teig zuzubereiten,
• den Teig gegebenenfalls fermentieren zu lassen,
• den Teig in einer Form anzuordnen,
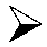 die aus einem hitzebeständigen Kunststoffpolymer, vorzugsweise einem Hochtemperatur-Polyester auf der Grundlage von Poly(cyclohexylen-dimethylen-terephtalat), ausgeführt
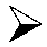 und mit Mitteln zum Abführen des während des und nach dem Backen(s) erzeugten Wasserdampfs ausgestattet ist,
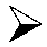 wobei die Abfuhrmittel Perforationen umfassen, die gleichmäßig über zumindest einen Teil der Wände der Form, vorzugsweise alle Wände, verteilt sind,
• zumindest einen Schritt des Backen des in der Form enthaltenen Teigs anhand von Mikrowellen auszuführen,
• gegebenenfalls einen weiteren Schritt des Backens durch andere Backmittel auszuführen,
• die erhaltene Backware von den Wänden der Form zu lösen,
• gegebenenfalls die Backware und/oder die Form zu kühlen
• und die Backware aus der Form zu entnehmen.

2. Verfahren nach Anspruch 1, **dadurch gekennzeichnet, dass** eine Form verwendet wird, die als eine massive Struktur aus hitzebeständigem Kunststoffpolymer, vorzugsweise durch Gießen, ausgeführt ist.

3. Verfahren nach Anspruch 1, **dadurch gekennzeichnet, dass** die Perforationen der Wände (in % der Gesamtfläche der Wände) 0,1 bis 10, vorzugsweise 1 bis 5 und besonders vorzugsweise 1,5 bis 2 darstellen.

4. Verfahren nach Anspruch 1, **dadurch gekennzeichnet, dass** Perforationen über alle oder einen Teil der Kanten der Form, vorzugsweise eine Perforation alle 4 cm +/- 0,5 und besonders vorzugsweise alle 2,0 cm +/- 0,5 oder alle 1,5 cm +/- 0,5 vorgesehen sind.

5. Verfahren nach einem der vorangegangenen Ansprüche, **dadurch gekennzeichnet, dass** die erhaltene Backware mit Hilfe eines Druckgasstrahls, vorzugsweise durch Anwendung von komprimierter Luft, von den Wänden der Form gelöst wird.

6. Verfahren nach Anspruch 5, **dadurch gekennzeichnet, dass** der Gasstrahl, vorzugsweise Luftstrahl, zum Ablösen mit einem Druck (in Bar) von 2 oder mehr, vorzugsweise 4 oder mehr und besonders vorzugsweise 5 bis 7 abgegeben wird.

7. Verfahren nach einem der vorangegangenen Ansprüche, **dadurch gekennzeichnet, dass** die Backware und/oder die Form mit Hilfe eines Druckgasstrahls und/oder mit Hilfe eines Lüftungssystems, das einen Luftstrom verteilt, gekühlt werden.

8. Verfahren nach Anspruch 7, **dadurch gekennzeichnet, dass** der Gasstrahl, vorzugsweise Luftstrahl, zum Kühlen mit einem Druck (in Bar) von 5 oder weniger, vorzugsweise 4 oder weniger und besonders vorzugsweise 1 bis 3 abgegeben wird.

9. Verfahren nach einem der vorangegangenen Ansprüche, **dadurch gekennzeichnet, dass** der Schritt des Backens anhand von Mikrowellen im Wesentlichen darin besteht, eine Gesamtleistung von 70 Wh/kg bis 110 Wh/kg, vorzugsweise 75 bis 85 Wh/kg aufzubringen.

10. Verfahren nach einem der vorangegangenen Ansprüche, **dadurch gekennzeichnet, dass** der Schritt des Backens anhand von Mikrowellen im Wesentlichen darin besteht:
• eine Phase 1 des Backens des in der Form enthaltenen Teigs anhand von Mikrowellen mit einer Nennleistung P1 durchzuführen:
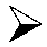 sodass die Abgabeleistung Pe1 (ausgedrückt in Watt/Minute/Gramm Teig) 10⁻³ bis 10⁻¹, vorzugsweise 1 · 10⁻² bis 3 · 10⁻² und besonders vorzugsweise 1,5 · 10⁻² bis 5,5 · 10⁻² beträgt
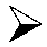 oder sodass die Abgabeleistung Pe1 (ausgedrückt in Wattstunde/Kilogramm Teig) 10 Wh/kg bis 40 Wh/kg und besonders vorzugsweise 12 Wh/kg bis 30 Wh beträgt;
• anschließend eine Phase 2 des Backens anhand von Mikrowellen mit einer Nennleistung P2 durchzuführen:
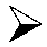 sodass die Abgabeleistung Pe2 (ausgedrückt in Watts/Minute/Gramm Teig) 10⁻³ bis 10⁻¹, vorzugsweise 1 · 10⁻² bis 7 · 10⁻² und besonders vorzugsweise 1,5 · 10⁻² bis 8,5 · 10⁻² beträgt;
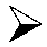 oder sodass die Abgabeleistung Pe2 (ausgedrückt in Wattstunde/Kilogramm Teig) 30 Wh/kg bis 100 Wh/kg und besonders vorzugsweise 55 bis 75 Wh/kg beträgt; und dass P1 ≤ P2.

11. Verfahren nach Anspruch 10, **dadurch gekennzeichnet, dass** der Schritt des Backens eine Phase 3 des Backens anhand von Mikrowellen mit einer Nennleistung P3 umfasst:
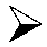 sodass die Abgabeleistung Pe3 (ausgedrückt in Watt/Minute/Gramm Teig) 10⁻³ bis 10⁻¹, vorzugsweise 1 · 10⁻² bis 3 · 10⁻² und besonders vorzugsweise 1,5 · 10⁻² bis 2,5 · 10⁻² beträgt;
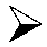 sodass die Abgabeleistung Pe3 (ausgedrückt in Wattstunde/Kilogramm Teig) 15 Wh/kg bis 75 Wh/kg und besonders vorzugsweise 30 bis 40 Wh/kg beträgt;
wobei ferner bekannt ist, dass P1 ≤ P2 und vorzugsweise Pe1 ≤ Pe2 ≤ Pe3.

12. Verfahren nach Anspruch 10 oder 11, **dadurch gekennzeichnet, dass** es eine optionale Phase Po des Erhitzens mit herkömmlichen Heizmitteln, die keine Mikrowellen sind, umfasst, die darin besteht, die den Teig enthaltende Form aus thermischem Kunststoffpolymer in einem geheizten Raum (vorzugsweise in einem Konvektionsofen) mit einer Temperatur To, die geringer als die Schmelztemperatur des thermischen Polymers ist und 100 bis 300°C, vorzugsweise 150 bis 250 °C beträgt, anzuordnen.

13. Verfahren nach einem der Ansprüche 9 bis 12, **dadurch gekennzeichnet, dass** während zumindest einer der Phasen des Backens die Feuchtigkeit im Backraum verändert wird, indem Dampf zugeführt und/oder der im Backraum vorhandene Dampf mit Hilfe von im Bäckereiwesen herkömmlicherweise als "Abzüge" bezeichneten Kaminen ganz oder teilweise abgeführt wird.

14. Verfahren nach einem der vorangegangenen Ansprüche, **dadurch gekennzeichnet, dass** die gebackene und am Ende des Verfahrens erhaltene Backware, insbesondere der Sandwich-Laib oder ähnliches, keine Kruste aufweist.

15. Verfahren nach einem der vorangegangenen Ansprüche, **dadurch gekennzeichnet, dass** die Zusammensetzung des Teigs (in Gewichtsteilen) Folgende ist:
• Mehl 100
• Wasser50 - 60
• Zucker 1 - 15
• Hefe 2 - 5
• Fett 1-15
• Zusatzstoffe 0 - 5.

16. Verfahren nach einem der vorangehenden Ansprüche, **dadurch gekennzeichnet, dass** während der eventuellen Fermentation des Teigs die Fermentation aktiviert wird, indem der Teig einer Mikrowellenquelle mit einer derartigen Abgabeleistung Pef ausgesetzt wird, dass der innerhalb des Teigs hervorgerufene Temperaturanstieg so groß wie oder kleiner als die Inaktivierungstemperatur der Hefe ist, wobei die für diese Aktivierung mittels Mikrowellen innerhalb des Teigs hervorgerufene Temperatur des Teigs 30 °C bis 50°C und besonders vorzugsweise 36 bis 42 °C beträgt, wobei die relative Luftfeuchtigkeit ihrerseits vorzugsweise 60 bis 99 % und besonders vorzugsweise 70 bis 95 % beträgt.

## Claims

1. Method for manufacturing bakery products, in particular sandwich bread or similar, **characterised in that** it essentially consists of:
- preparing a dough,
- optionally, fermenting said dough,
- placing the dough in a mould
-- made from a heat-resistant plastic polymer, preferably a high-temperature polyester containing poly(cyclohexylene-dimethylene-terephthalate);
-- and provided with means for evacuating the water vapour produced during and after cooking,
the evacuation means comprising perforations distributed regularly over at least a portion of the walls of the mould, preferably over all the walls,
- carrying out at least one step of cooking the dough contained in the mould via microwaves,
- optionally, carrying out another step of cooking via other cooking means,
- separating the cooked product obtained from the walls of the mould,
- optionally, cooling the cooked product and/or the mould,
- and removing the cooked product from the mould.

2. Method according to claim 1, **characterised in that** a mould is used that is made according to a bulk structure made of a heat-resistant plastic polymer, preferably via moulding.

3. Method according to claim 1, **characterised in that** the perforations of the walls represent (in % of the total surface area of the walls) between 0.1 and 10, preferably between 1 and 5, and, even more preferably between 1.5 and 2.

4. Method according to claim 1, **characterised in that** perforations are arranged over all or a portion of the edges of the mould, preferably at a rate of one perforation every 4cm +/- 0.5, and even more preferably every 2.0cm +/- 0.5 or every 1.5cm +/-0.5.

5. Method according to any one of the previous claims, **characterised in that** the cooked product obtained is separated from the walls of the mould, using a pressurised gaseous jet, preferably by applying compressed air.

6. Method according to claim 5, **characterised in that** the gaseous jet, preferably of air, for separation is emitted at a pressure (in bars) greater than or equal to 2, preferably greater than or equal to 4, and, even more preferably, between 5 and 7.

7. Method according to any one of the previous claims, **characterised in that** the cooked product and/or the mould are cooled using a pressurised gaseous jet or and/or using a ventilation system that diffuses a flow of air.

8. Method according to claim 7, **characterised in that** the gaseous jet, preferably of air, for cooling is emitted at a pressure (in bars) less than or equal to 5, preferably less than or equal to 4, and, even more preferably, between 1 and 3.

9. Method according to any one of the previous claims, **characterised in that** the step of cooking using microwaves substantially involves using a total power between 70Wh/kg and 110Wh/kg, preferably between 75 and 85Wh/kg.

10. Method according to any one of the previous claims, **characterised in that** the step of cooking using microwaves essentially consists of:
- implementing a phase 1 of cooking the dough contained in the mould using microwaves with a nominal power P1:
-- such that the emission power Pe1 (expressed in watts/min/gram of dough) is between 10⁻³ and 10⁻¹, preferably between 1.10⁻² and 3.10⁻², and even more preferably between 1.5.10⁻² and 5.5.10⁻²
-- or such that the emission power Pe1 (expressed in watt hours/kilogram of dough) is between 10Wh/kg and 40Wh/kg, and even more preferably between 12Wh/kg and 30Wh;
- then implementing a phase 2 of cooking using microwaves with a nominal power P2:
-- such that the emission power Pe2 (expressed in watts/min/gram of dough), is between 10⁻³ and 10⁻¹, preferably between 1.10⁻² and 7.10⁻², and even more preferably between 1.5.10⁻² and 8.5.10⁻²;
-- or such that the emission power Pe2 (expressed in watt hours/kilogram of dough), is between 30Wh/kg and 100Wh/kg, and even more preferably between 55 and 75Wh/kg;
and **in that** P1≤P2.

11. Method according to claim 10, **characterised in that** the step of cooking comprises a phase 3 of cooking, via microwaves with a nominal power P3:
- such that the emission power Pe3 (expressed in watts/min/gram of dough), is between 10⁻³ and 10⁻¹, preferably between 1.10⁻² and 3. 10⁻², and even more preferably between 1.5.10⁻² and 2.5.10⁻²;
- such that the emission power Pe3 (expressed in watt hours/kilogram of dough), between 15Wh/kg and 75Wh/kg, and more preferably between 30 and 40Wh/kg; moreover given that P1≤P2 and preferably Pe1 ≤ Pe2 ≤ Pe3.

12. Method according to claim 10 or 11, **characterised in that** it comprises an optional phase Po of heating via conventional heating means other than microwaves, involving placing the mould made of thermal plastic polymer containing the dough in a heated chamber (preferably in a convention oven) having a temperature To lower than the melting temperature of the thermal polymer forming the mould and between 100 and 300°C, preferably between 150 and 250°C.

13. Method according to any one of claims 9 to 12, **characterised in that** during at least one of the cooking phases, the humidity of the cooking chamber is modified by adding vapour and/or by evacuating all or a portion of the vapour present in the cooking chamber, using chimneys conventionally called stacks in the baking industry.

14. Method according to any one of the previous claims, **characterised in that** the bakery product, in particular the sandwich or similar, cooked and obtained after the method, does not have a crust.

15. Method according to any one of the previous claims, **characterised in that** the composition of the dough is the following (in parts by weight):
- flour 100
- water 50-60
- sugar 1-15
- yeast 2-5
- fats 1-15
- additives 0-5.

16. Method according to any one of the previous claims, **characterised in that** during the optional fermentation of the dough, said fermentation is activated by exposing the dough to a source of microwaves, with an emission power Pef such that the increase in temperature induced in the centre of the dough is less than or equal to the deactivation temperature of the yeast, the temperature induced in the centre of the dough for this activation via microwaves preferably being, between 30°C and 50°C, and, even more preferably between 36 and 42°C, the humidity being as it preferably between 60 and 99% ERH, and, even more preferably between 70 and 95% ERH.
